# DEMANDE DE BREVET EUROPEEN

(11) **EP 0 882 907 A1**
(43) Date de publication de la demande: **09.12.1998**
(21) Numéro de dépôt: 98401319.3
(22) Date de dépôt: 02.06.1998
(51) Int. Cl.: F16F 9/49

(54) **Amortisseur à huile**

(30) Priorité: 05.06.1997 FR 9706957
(71) Demandeur: Donerre Amortisseur, 82000 Montauban (FR)
(72) Inventeur: de Frenne, Pierre, 82000 Montauban (FR)
(74) Mandataire: Debay, Yves

(57) **Abrégé**

La présente invention concerne un amortisseur à huile comportant un piston (3) monté à l'extrémité libre d'une tige (4) tubulaire mobile se déplaçant dans un corps (2) cylindrique creux en délimitant, de part et d'autre du piston, un premier (21) et un second (22) volume de travail, une tige (34) centrale étant disposée à l'intérieur de la tige (4) tubulaire, la tige (4) tubulaire comportant au moins un orifice (24) latéral reliant le second (22) volume de travail au premier (21) volume de travail par au moins un passage (25) central réalisé entre la tige (4) tubulaire et la tige (34) centrale et formé par une différence relative de dimensions transverses entre la tige (34) centrale et le diamètre intérieur de la tige (4) tubulaire, le ou les orifices (24) étant formés sur la tige (4) tubulaire à une distance du piston (3) égale à au moins la moitié de l'épaisseur de ce dernier, l'extrémité du corps (2) cylindrique creux étant refermée de manière étanche par un bouchon et/ou un guide-tige (5) conformé de façon qu'avant la fin de course de détente, les orifices (24) formés sur la tige (4) tubulaire sont obturés de manière étanche par la paroi interne du guide-tige (5) avant l'évacuation de la totalité de l'huile du second (22) volume de travail vers le premier (21) volume de travail, pour former une poche d'huile d'épaisseur suffisante pour constituer un coussin hydraulique pour le piston (3).

## Description

La présente invention concerne un amortisseur à huile pour véhicules tels que vélos tout terrain, motos, voitures...

Il est connu par le document US 4,958,706 un amortisseur à huile dans lequel le piston chasse, lors de la compression, l'huile d'un premier volume de travail du cylindre vers d'une part un second volume de travail du cylindre et d'autre part vers une chambre de réserve sur l'extérieur de laquelle est appliqué un gaz. Lors de l'extension, l'huile transite du second volume de travail et de la chambre de réserve vers le premier volume de travail. La tige mobile portant le piston est tubulaire et contient une tige centrale qui fait saillie par rapport à la tige mobile dans le premier volume de travail. Au niveau de son extrémité qui est rendue solidaire du piston, la tige tubulaire a un diamètre intérieur supérieur au diamètre extérieur de la tige centrale pour constituer un passage central pour l'huile. Une valve ayant sensiblement la forme d'un chapeau et pourvue de rainures longitudinales est logée dans l'ouverture de la tige tubulaire. La bordure du chapeau constitué par la valve est superposée à un clapet thermoexpansif et vient en appui sur le bord de l'extrémité de la tige tubulaire. La valve et le clapet thermoexpansif sont maintenus en appui sur l'extrémité de la tige tubulaire pour obstruer le passage central au moyen d'un ressort de compression monté sur la tige centrale et en appui sur une rondelle solidaire de ce dernier. Lors de l'extension, l'huile transite par un orifice ménagé dans la tige cylindrique, à la base du piston dans le second volume de travail, puis par le passage central autour de la valve en forme de chapeau et autour du clapet thermoexpansif. L'huile passe ensuite dans le premier volume de travail au travers d'orifices latéraux ménagés dans le corps du piston et au travers d'un orifice ménagé dans l'extrémité d'un chapeau rendu solidaire du piston et entourant l'extrémité de la tige centrale qui fait saillie dans le premier volume de travail. Le contrôle du flux lors de l'extension est réalisé par les deux régulateurs de flux que sont la valve en forme de chapeau et de clapet thermoexpansif. Le contrôle de l'extension aux basses vitesses de l'huile est assuré par le clapet thermoexpansif tandis que le contrôle aux hautes vitesses est assuré par les ouvertures sur la valve en forme de chapeau. La pression du ressort de compression sur la valve et le clapet thermoexpansif peut être réglée par un vissage/dévissage de la tige centrale dans la tige tubulaire, mais nécessite au préalable un démontage de l'extrémité de fixation de l'amortisseur sur l'axe de la roue.

Cependant, ce type d'amortisseur assure un contrôle de l'extension peu satisfaisant. Ainsi, aux hautes vitesses et en fin de course le piston peut venir buter sur le fond du corps cylindrique de l'amortisseur. Par ailleurs, le système à clapet et valve ne permet pas un contrôle satisfaisant du début de l'extension, le flux d'huile étant libéré sans progressivité. De plus, le double mécanisme de contrôle des flux d'huile lors de l'extension aux hautes et basses vitesses fait intervenir un nombre important de pièces complexes qui augmente le coût de l'amortisseur ce qui est particulièrement rédhibitoire dans le cas d'un amortisseur pour vélo par exemple.

Un premier but de l 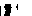 invention est de proposer un amortisseur à huile assurant un contrôle amélioré du flux d'huile lors de l'extension, palliant les inconvénients de l'art antérieur.

Ce but est atteint par le fait que l'amortisseur à huile comporte un piston monté à l'extrémité libre d'une tige tubulaire mobile, solidaire par son autre extrémité de la queue de l'amortisseur, la tige tubulaire se déplaçant dans un corps cylindrique creux en délimitant, de part et d'autre du piston, un premier et un second volume de travail, une tige centrale étant disposée à l'intérieur de la tige tubulaire, la tige tubulaire comportant au moins un orifice latéral reliant le second volume de travail au premier volume de travail par au moins un passage central réalisé entre la tige tubulaire et la tige centrale et formé par une différence relative de dimensions transverses entre la tige centrale et le diamètre intérieur de la tige tubulaire, le ou les orifices étant formés sur la tige tubulaire à une distance du piston égale à au moins la moitié de l'épaisseur de ce dernier, l'extrémité du corps cylindrique creux étant refermée de manière étanche par un bouchon et/ou un guide-tige conformé de façon qu'avant la fin de course de détente, les orifices formés sur la tige tubulaire sont obturés de manière étanche par la paroi interne du guide-tige avant l'évacuation de la totalité de l'huile du second volume de travail vers le premier volume de travail, pour former une poche d'huile d'épaisseur suffisante pour constituer un coussin hydraulique pour le piston.

Selon une autre particularité la tige tubulaire comporte quatre orifices reliant le second volume de travail au premier volume de travail situés à une distance de la base adjacente du piston sensiblement égale à l'épaisseur de ce dernier, le passage central étant formé par une réduction de diamètre de la tige centrale au niveau de son extrémité débouchant dans le premier volume de travail.

Selon une autre particularité l'extrémité du corps cylindrique creux est refermée par un guide-tige ayant une longueur sensiblement égale à deux fois l'épaisseur du piston.

Un autre but de l 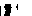 invention est de proposer un amortisseur à huile permettant un réglage aisé de la pression d'ouverture de la valve d'extension, sans démontage de l'amortisseur.

Ce but est atteint par le fait que l'extrémité de la tige centrale de l'amortisseur fait saillie par rapport à la tige tubulaire dans le premier volume de travail, un clapet anti-retour de détente étant monté à l'extrémité de la tige centrale, l'extrémité de la tige centrale, qui fait saillie dans le premier volume de travail, étant pourvue d'une tête formant un appui pour des moyens élastique exerçant une pression sur le clapet anti-retour de façon à appuyer ce dernier sur le siège d'un perçage situé à l'extrémité de la tige tubulaire solidaire du piston, pour obstruer l'orifice de sortie du passage central vers le premier volume de travail, des moyens de commande à distance situé à proximité de l'extrémité de la tige tubulaire rendue solidaire de la queue de l'amortisseur permettant la translation de la tige centrale par rapport à la tige tubulaire pour régler la pression exercée par les moyens élastique sur le clapet détente sans démontage de l'amortisseur.

Selon une autre particularité le clapet détente a sensiblement la forme d'un tube cylindrique pourvu d'un épaulement radial à l'une de ses extrémités, le clapet détente étant enfilé sur la tige centrale et pouvant coulisser dans un logement cylindrique complémentaire formé à l'extrémité de la tige tubulaire solidaire du piston, la translation du clapet détente vers l'intérieur de la tige tubulaire étant limitée par la butée de l'épaulement radial du clapet sur le bord de l'extrémité de la tige tubulaire et assurant l'obturation de l'orifice de sortie du passage central vers le premier volume de travail, le clapet détente étant pourvu d'au moins une entaille située dans un plan contenant l'axe de symétrie longitudinal du clapet et ayant une profondeur décroissante de l'extrémité opposée à l'épaulement vers l'épaulement, assurant une ouverture graduelle de l'orifice de sortie du passage central vers le premier volume de travail lors de la translation du clapet détente dans le sens de sa sortie hors du logement cylindrique de l'extrémité de la tige tubulaire.

Selon une autre particularité l'extrémité de la tige centrale fait saillie par rapport à la tige tubulaire dans le corps de la queue de l'amortisseur et comporte un alésage transversal complémentaire d'un axe de réglage, l'axe de réglage étant logé simultanément dans un logement transversal formé dans la corps de la queue de l'amortisseur et dans l'alésage de la tige centrale, le logement transversal du corps de la queue de l'amortisseur étant conformé pour permettre une translation limitée de l'axe de réglage selon la direction de l'axe de symétrie longitudinal de la tige centrale, les deux extrémités de l'axe de réglage faisant saillie de part et d'autre du corps de la queue de l'amortisseur, la queue de l'amortisseur comportant un filetage sur sa périphérie prévu pour le vissage d'un bouchon de molette ayant sensiblement la forme d'une bague, l'axe de réglage étant rendu solidaire du bouchon de molette par des moyens de blocage, de façon que le vissage et dévissage du bouchon de molette sur le corps de la queue de l'amortisseur assure le réglage de la position de l'axe dans son logement par rapport à la tige tubulaire montée fixe en translation sur le corps de la queue de l'amortisseur, pour régler la pression exercée par les moyens élastique sur le clapet détente.

Selon une autre particularité le bouchon de molette est pourvu sur sa périphérie d'un filetage destiné au vissage d'une molette de réglage ayant sensiblement la forme d'une bague et constituant les moyens de blocage de l'axe de réglage, la molette de réglage et le bouchon de molette étant conformés de façon que le vissage la molette de réglage sur le bouchon de molette permette le blocage des extrémités de l'axe de réglage entre la molette de réglage et le bouchon de molette.

Selon une autre particularité le piston comporte sur sa face située en vis-à-vis du premier volume de travail, une saillie sensiblement tubulaire et concentrique à l'orifice du piston prévu pour l'ensemble tige tubulaire, tige centrale, la saillie tubulaire étant destinée à réguler le flux d'huile transitant par le passage central situé entre la tige tubulaire et la tige centrale lors de la détente, pour assurer un meilleur contrôle de cette dernière.

Selon une autre particularité lors de la compression le piston chasse l'huile du premier volume de travail vers d'une part, le second volume de travail au travers de passages ménagés dans le corps du piston et obturés par une rondelle anti-retour déformable, et d'autre part, vers une chambre de réserve déformable sur l'extérieur de laquelle est appliquée un gaz, l'huile étant évacuée vers la chambre de réserve par au moins deux orifices réglables intervenant chacun selon une vitesse de déplacement du piston différente, les orifices étant disposés entre une chambre intermédiaire de volume déterminé et la chambre de réserve.

Selon une autre particularité l'huile est évacuée vers la chambre de réserve par trois orifices réglables, un premier orifice étant obturé par un premier clapet anti-retour réglable de façon à ne permettre l'évacuation de l'huile que dans le as où la pression exercée par le piston sur l'huile dépasse les conditions prévues d'utilisation du véhicule les plus extrêmes, un second orifice étant obturé par un second clapet anti-retour réglé pour une plage de vitesses de déplacement du piston situé entre les basses vitesses et les vitesses de frein hydraulique, un troisième orifice étant pourvu d'un étranglement réglable permettant d'évacuer l'huile aux basses vitesses.

Selon une autre particularité le piston est vissé sur une portion filetée située sensiblement à l'extrémité de la tige tubulaire mobile, la rondelle anti-retour déformable étant serrée sur une extrémité d'une rondelle de précharge rigide en appui sur un épaulement radial formé sur le corps de la tige tubulaire mobile, la face de la rondelle de précharge située en vis-à-vis de la rondelle anti-retour étant sensiblement convexe pour permettre la déformation de la rondelle anti-retour lors de la compression de l'amortisseur de façon que cette dernière viennent en appui sur la rondelle de précharge.

Selon une autre particularité la chambre de réserve déformable est située dans un réservoir rapporté au corps cylindrique creux de l'amortisseur au moyen d'un raccord rigide.

D 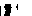 autres particularités et avantages de la présente invention apparaîtront plus clairement à la lecture de la description ci-après faite en référence aux dessins annexés dans lesquels :
- la figure 1 représente une vue en coupe de l'amortisseur selon l'invention,
- la figure 2 représente une vue en perspective éclatée d'une partie de l'ensemble des pièces constituant l'amortisseur de la figure 1,
- la figure 3 représente une vue en perspective éclatée d'une partie des pièces constituant le mécanisme de réglage de la détente de l'amortisseur de la figure 1,
- la figure 4 représente une vue en coupe du piston de l'amortisseur de la figure 1,
- la figure 5 représente une vue partielle, éclatée et coupe, de l'extrémité mobile de la tige et du clapet détente associé de l'amortisseur de la figure 1.

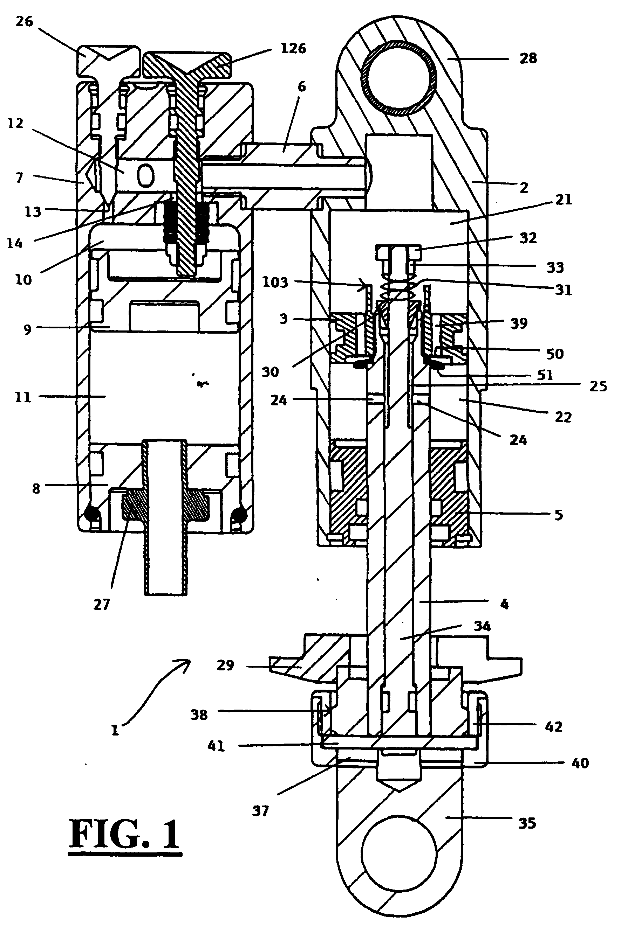

L 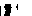 invention va à présent être décrite en référence aux figures 1 à 5. Dans l'exemple de réalisation préféré de l'invention, nullement limitatif, l'amortisseur à huile comporte un cylindre (2) creux dans lequel se déplace un piston (3) monté à une première extrémité d'une tige (4) tubulaire mobile. L'extrémité du corps cylindrique (2) creux étant refermée de manière étanche par un bouchon et/ou un guide-tige (5). La seconde extrémité de la tige (4) tubulaire mobile est solidaire d'une queue (35) d'amortisseur formant un oeillet. Une rondelle (29) de butée est solidaire de la queue (35) d'amortisseur. L'extrémité du cylindre (2) située à l'opposé de l'oeillet de la queue (35) d'amortisseur comporte également un oeillet (28) de fixation au véhicule. En se déplaçant dans le cylindre (2) creux, la tige (4) tubulaire mobile délimite, de part et d'autre du piston (3), un premier (21) et un second (22) volume de travail. Lors de la compression, le piston (3) chasse l'huile du premier (21) volume de travail vers d'une part, le second (22) volume de travail au travers de passages (39) ménagés dans le corps du piston (3) et obturés par une rondelle (50) anti-retour déformable, et d'autre part vers une chambre (10) de réserve déformable sur l'extérieur de laquelle est appliquée un gaz (11). La chambre (10) de réserve déformable peut être située dans un réservoir (7) creux rapporté au corps (2) cylindrique creux de l'amortisseur au moyen d'un raccord (6) rigide. Le réservoir (7) peut être cylindrique et refermé à son extrémité par un bouchon (8) sur lequel est montée une valve (27) d'entrée du gaz dans le réservoir. La chambre (10) de réserve déformable du réservoir (7) contenant l'huile peut être séparée du volume contenant le gaz (11), constitué par exemple d'azote, au moyen d'un piston (9) diviseur mobile. L'huile est évacuée vers la chambre (10) de réserve par au moins un orifice. Dans l'exemple de réalisation préféré illustré à la figure 1, l'huile est évacuée vers la chambre (10) de réserve par deux orifices (13, 14) réglables intervenant chacun selon une vitesse de déplacement du piston (3) différente. Les deux orifices (13, 14) peuvent être disposés entre une chambre (12) intermédiaire de volume déterminé et la chambre (10) de réserve. Un premier (13) orifice permet par exemple l'évacuation de l'huile aux basses vitesses tandis qu'un second (14) orifice peut évacuer l'huile aux hautes vitesses. Par exemple, le premier (13) orifice peut être sensiblement tronconique et obturé de manière réglable par un opérateur au moyen d'une vis (26) pointeau basses vitesses. Le second (14) orifice peut quant à lui être obturé par un clapet (214) anti-retour réglable. Par exemple, le clapet (214) anti-retour obturant le second (14) orifice peut être constitué d'une vis (126) de réglage hautes vitesses vissée dans le corps du réservoir et faisant saillie dans la chambre (10) de réserve. L'extrémité de la vis (126) faisant saillie dans la chambre (10) de réserve peut être pourvue d'un chapeau de maintien d'un moyen élastique appuyant avec une force déterminée sur une rondelle d'étanchéité pour obturer le second (14) orifice. Bien sûr, il est possible de prévoir un amortisseur dans lequel l'huile est évacuée vers la chambre (10) de réserve par trois orifices différents, comme décrit dans la demande de brevet français EN 96 09 329 déposée le 24 juillet 1996 par la requérante.

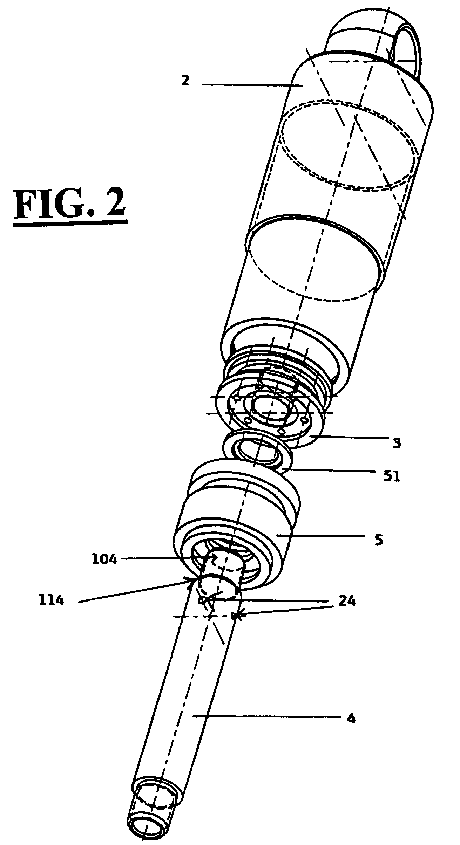

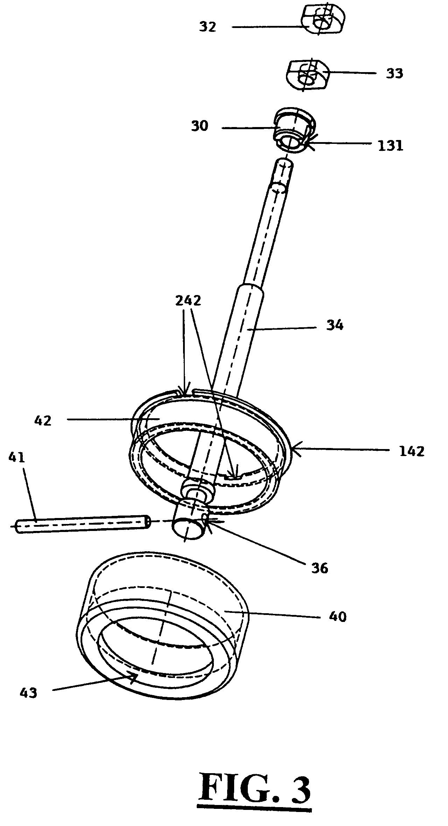

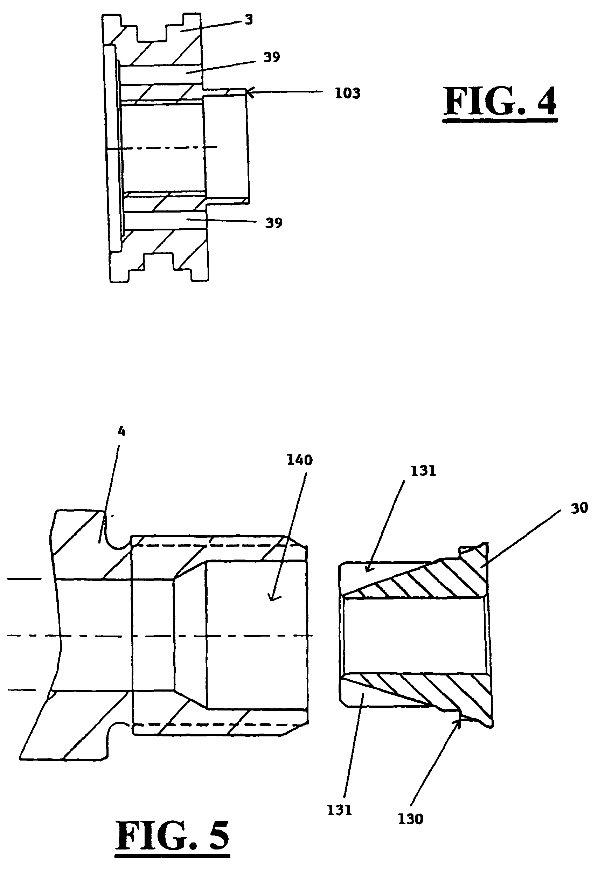

Le piston (3) peut être vissé sur une portion (104) filetée située à l'extrémité de la tige (4) tubulaire mobile. La rondelle (50) anti-retour qui se déforme lors de la compression peut par exemple être prise en sandwich entre le piston (3) et une extrémité d'une rondelle (51, figures 1 et 2) de précharge rigide en appui sur un épaulement (114, figure 2) radial formé sur le corps de la tige (4) tubulaire mobile. La rondelle (51) de précharge peut par exemple être constituée d'acier trempant ou de tout autre matériau. L'épaulement (114) radial du corps de la tige (4) sur lequel est en appui la rondelle (51) de précharge peut être formé par une différence de diamètre entre l'extrémité filetée (104) de la tige (4) tubulaire mobile sur laquelle est vissé le piston (3) et la partie centrale de cette tige (4) tubulaire mobile. La face de la rondelle (51) de précharge située en vis-à-vis de la rondelle (50) anti-retour peut comporter une saillie formant un anneau sur lesquels est montée ou enfilée la rondelle (50) anti-retour. De manière avantageuse, la face de la rondelle (51) de précharge située en vis-à-vis de la rondelle (50) anti-retour comporte des courbures et/ou inclinaisons formant une convexité vers la rondelle (50) anti-retour. La convexité de la rondelle (51) de précharge permet la déformation de la rondelle (50) anti-retour de façon que cette dernière vienne en appui sur la rondelle (51) de précharge lors de la compression. Ainsi, lors de la compression, la déformation de la rondelle (50) anti-retour est limitée à une amplitude maximum déterminée par la forme de la rondelle (51) de précharge, le passage pour l'huile à travers le piston (3) se trouve de cette façon limité. Dans l'exemple de réalisation décrit, le piston (3) comporte six passages (39) longitudinaux obturés par la rondelle (50) anti-retour déformable. Les six passages (39) longitudinaux sont répartis à angles identiques les uns des autres sur un cercle concentrique à l'axe de symétrie du piston (3). Le piston (3) peut être constitué de titane ou de tout autre matériau équivalent. La tige (4) tubulaire mobile contient dans son volume intérieur une tige (34) centrale ou tige (34) de détente. Lors de l'extension, le piston (3) chasse l'huile du second (22) volume de travail vers d'une part le premier (21) volume de travail et d'autre part vers la chambre (10) de réserve. A cet effet, la tige (4) tubulaire mobile comporte sur sa périphérie au moins un orifice (24) reliant le second (22) volume de travail au premier (21) volume de travail par au moins un passage (25) central situé entre la tige (4) tubulaire et la tige (34) de détente. Le passage (25) central est réalisé, par exemple, par une différence relative de dimensions transverses entre la tige (34) de détente et le diamètre intérieur de la tige (4) tubulaire. De manière avantageuse, le ou les orifices (24) sont formés sur la tige (4) tubulaire à une distance du piston (3) égale à au moins la moitié de l'épaisseur de ce dernier. Le guide-tige (5) est conformé de façon qu'avant la fin de course de détente les orifices (24) formés sur la tige (4) tubulaire sont obturés de manière étanche par la paroi interne du guide-tige (5), ceci avant l'évacuation de la totalité de l'huile du second (22) volume de travail vers le premier (21) volume de travail, pour former une poche d'huile d'épaisseur suffisante pour constituer un coussin hydraulique pour le piston (3). Le guide-tige (5) peut être constitué d'un alliage de cuivre, zinc et plomb ou de tout autre matériau équivalent. Dans une forme de réalisation préférée nullement limitative, la tige (4) tubulaire comporte quatre orifices (24) reliant le second (22) volume de travail au premier (21) volume de travail par le passage (25) central. Les quatre orifices (24) sont situés à une distance de la base adjacente du piston (3) sensiblement égale à l'épaisseur du piston. Le guide-tige (5) refermant l'extrémité du cylindre (2) a quant à lui une longueur sensiblement égale à deux fois l'épaisseur du piston (3). Par ailleurs, dans l'exemple de réalisation décrit, le passage (25) central est formé par une réduction de diamètre de la tige (34) de détente par rapport au diamètre intérieur de la tige (4) tubulaire. Bien entendu, le piston (9) diviseur, le piston (3) solidaire de la tige (4) mobile, le bouchon (8) du réservoir (7), et le guide-tige (5) comportent sur leur périphérie des logements destinés à accueillir des joints d'étanchéité annulaires. Par soucis de simplification, la plupart des joints d'étanchéité ne sont pas représentés à figure 1. L'extrémité de la tige (34) de détente fait saillie par rapport à la tige (4) tubulaire dans le premier (21) volume de travail. Un clapet (30) anti-retour de détente est monté ou enfilé à l'extrémité de la tige (34) de détente qui fait saillie dans le premier (21) volume de travail. Cette extrémité de la tige (34) de détente faisant saillie dans le premier (21) volume de travail est pourvue d'une tête (32, 33) formant un appui pour des moyens (31) élastiques exerçant une pression sur le clapet (30) détente de façon à appuyer ce dernier sur le siège d'un perçage ou logement (40, figure 5) formé à l'extrémité de la tige (4) tubulaire, pour obstruer l'orifice de sortie du passage (25) central vers le premier (21) volume de travail. La tête formée à l'extrémité de la tige (34) de détente est constituée par un système à écrou (32) et contre-écrou (33) vissés sur cette dernière ou de tout autre moyen équivalent. Les moyens (31) élastiques exerçant une pression sur le clapet (30) détente sont par exemple constitués d'un empilage de rondelles Belleville montées en opposition, d'un ressort de compression ou de tout autre moyen équivalent. Le clapet (30) détente peut avoir la forme d'un tube cylindrique pourvu, à l'une de ses extrémités, d'un épaulement (130) radial vers l'extérieur du cylindre. Le clapet (30) détente, enfilé sur la tige (34) de détente, peut par exemple coulisser dans un logement (40, figure 5) cylindrique complémentaire formé à l'extrémité de la tige (4) tubulaire. La translation du clapet (30) détente vers l'intérieur de la tige (4) tubulaire est limitée par la butée de l'épaulement (130, figure 5) radial du clapet (30) sur le bord de l'extrémité de la tige (4) tubulaire. Cette butée de l'épaulement (130, figure 5) radial du clapet (30) sur le bord de l'extrémité de la tige (4) tubulaire assure par ailleurs l'obturation étanche de l'orifice de sortie du passage (25) central vers le premier (21) volume de travail. De manière avantageuse, le clapet (30) détente peut être pourvu sur sa périphérie d'au moins une entaille (131, figure 5) située dans un plan contenant l'axe de symétrie du clapet (30) et ayant une profondeur décroissante de l'extrémité du clapet (30) opposée à l'épaulement (130) vers l'épaulement (130). La ou les entailles (131) longitudinales assurent une progressivité de l'ouverture de l'orifice de sortie du passage (25) central vers le premier (21) volume de travail lors de la translation du clapet (30) détente dans le sens de sa sortie hors du logement (140) cylindrique de la tige (4) tubulaire. De manière préférée et comme représenté aux figures 1 et 3, le clapet (30) détente comporte deux entailles (131) disposées à 180 degrés l'une de l'autre par rapport à l'axe de symétrie longitudinal du clapet. L'amortisseur peut être pourvu de moyens (40, 41, 42) de commande à distance permettant la translation de la tige (34) centrale par rapport à la tige (4) tubulaire pour régler la pression exercée par les moyens (31) élastique sur le clapet (30) détente sans démontage de l'amortisseur. Ces moyens (40, 41, 42) de commande à distance sont par exemple situés à proximité de l'extrémité de la tige (4) tubulaire rendue solidaire de la queue (35) de l'amortisseur formant l'oeillet. La queue (35) de l'amortisseur peut être sensiblement cylindrique. La tige (4) tubulaire peut être rendue solidaire de la queue (35) de l'amortisseur par vissage de son extrémité dans le corps de cette dernière ou par tout autre moyen équivalent. L'extrémité de la tige (34) centrale fait saillie par rapport à la tige (4) tubulaire dans le corps de la queue (35) de l'amortisseur et comporte un alésage (36) transversal prévu pour un axe (41) de réglage. L'axe (41) de réglage est destiné à être logé simultanément dans un logement (37) transversal formé dans le corps de la queue (35) de l'amortisseur et dans l'alésage (36) de la tige (34) centrale. Les deux extrémités de l'axe (41) de réglage faisant saillie de part et d'autre du corps de la queue (35) de l'amortisseur. Le logement (37) transversal du corps de la queue (35) de l'amortisseur est conformé pour permettre une translation limitée de l'axe (41) de réglage selon la direction de l'axe de symétrie longitudinal de la tige (34) centrale. La queue (35) de l'amortisseur comporte une portion filetée (38) sur sa périphérie, prévu pour le vissage d'un bouchon (42, figures 1 et 3) de molette ayant sensiblement la forme d'une bague cylindrique. Comme représenté à la figure 1, la portion filetée (38) de la queue (35) de l'amortisseur peut avoir un diamètre supérieur au diamètre du reste du corps de la queue (35) de l'amortisseur. Le bouchon (42) de molette est fileté sur sa partie cylindrique et comporte, à l'une de ses extrémités, un épaulement (142) radial vers l'extérieur du cylindre. Le bouchon (42) de molette est vissé sur la queue (35) de l'amortisseur de façon que son extrémité pourvue d'un épaulement (142) soit située en vis-à-vis de la rondelle (29) de butée. Le filetage du bouchon (42) de molette est destiné au vissage sur ce dernier d'une molette (40) de réglage sensiblement cylindrique. La molette (40) de réglage comporte, à l'une de ses extrémités, un épaulement (142) radial orienté vers l'intérieur du cylindre et définissant une ouverture de dimensions correspondant aux dimensions transverses du corps de la queue (35) de l'amortisseur. La molette (40) de réglage est vissée sur le bouchon (42) de molette de façon que l'extrémité de la molette (40) de réglage située à l'opposé de l'épaulement (43) vienne en butée contre l'épaulement (142) du bouchon (42) de molette. La molette (40) de réglage et le bouchon (42) de molette sont par ailleurs conformés de façon que lorsque la molette (40) de réglage est vissée sur le bouchon (42) de molette, les extrémités de l'axe (41) de réglage sont bloquées entre l'extrémité du bouchon (42) de molette et l'épaulement (43) de la molette (40) de réglage. Ainsi, en vissant/dévissant le bouchon (42) de molette sur la queue (35) de l'amortisseur, l'opérateur peut déplacer la tige (34) de détente par rapport à la tige (4) tubulaire fixe en translation sur la queue (35) de l'amortisseur et ainsi régler la compression des moyens (31) élastiques exerçant une pression sur le clapet (30) détente. De cette façon l'opérateur peut régler très facilement la réponse de l'amortisseur à la détente. La molette (40) de réglage et/ou le bouchon (42) de molette peuvent être pourvus de repères et/ou graduations facilitant le réglage de la détente. Par exemple, et comme représenté à la figure 3, l'épaulement (142) du bouchon (42) de molette peut comporter deux entailles (242) diamétralement opposées destinées à coopérer avec un outil de vissage/dévissage du bouchon (42) de molette. Il est également possible de prévoir que les deux entailles (242) coopèrent avec une graduation formée sur la queue (35) de l'amortisseur ou/et sur la molette (40) de réglage, pour faciliter à l'opérateur le réglage de la détente. De manière avantageuse, le piston (3) peut comporter sur sa face située en vis-à-vis du premier (21) volume de travail, une saillie (103, figures 1 et 4) sensiblement tubulaire et concentrique à l'ensemble tige (4) tubulaire, tige (34) centrale. La saillie (103) peut être rapportée au piston (3) par tout moyen approprié ou peut être d'une seule pièce avec le piston (3). La saillie (103) tubulaire du piston (3), de forme cylindrique par exemple, est destinée à réguler le flux d'huile transitant par le passage (25) central situé entre la tige (4) tubulaire et la tige (34) centrale lors de la détente, pour assurer un meilleur contrôle de cette dernière.

D 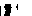 autres modifications à la portée de l 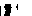 homme de métier font également partie de l 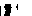 esprit de l 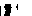 invention.

## Revendications

1. Amortisseur à huile comportant un piston (3) monté à l'extrémité libre d'une tige (4) tubulaire mobile, solidaire par son autre extrémité de la queue (35) de l'amortisseur, la tige (4) tubulaire se déplaçant dans un corps (2) cylindrique creux en délimitant, de part et d'autre du piston, un premier (21) et un second (22) volume de travail, une tige (34) centrale étant disposée à l'intérieur de la tige (4) tubulaire, la tige (4) tubulaire comportant au moins un orifice (24) latéral reliant le second (22) volume de travail au premier (21) volume de travail par au moins un passage (25) central réalisé entre la tige (4) tubulaire et la tige (34) centrale et formé par une différence relative de dimensions transverses entre la tige (34) centrale et le diamètre intérieur de la tige (4) tubulaire, caractérisé en ce que le ou les orifices (24) sont formés sur la tige (4) tubulaire à une distance du piston (3) égale à au moins la moitié de l'épaisseur de ce dernier, l'extrémité du corps (2) cylindrique creux étant refermée de manière étanche par un bouchon et/ou un guide-tige (5) conformé de façon qu'avant la fin de course de détente, les orifices (24) formés sur la tige (4) tubulaire sont obturés de manière étanche par la paroi interne du guide-tige (5) avant l'évacuation de la totalité de l'huile du second (22) volume de travail vers le premier (21) volume de travail, pour former une poche d'huile d'épaisseur suffisante pour constituer un coussin hydraulique pour le piston (3).

2. Amortisseur à huile selon la revendication 1 caractérisé en ce que la tige (4) tubulaire comporte quatre orifices (24) reliant le second (22) volume de travail au premier (21) volume de travail situés à une distance de la base adjacente du piston (3) sensiblement égale à l'épaisseur de ce dernier, le passage (25) central étant formé par une réduction de diamètre de la tige (34) centrale au niveau de son extrémité débouchant dans le premier volume de travail.

3. Amortisseur à huile selon la revendication 2 caractérisé en ce que l'extrémité du corps (2) cylindrique creux est refermée par un guide-tige (5) ayant une longueur sensiblement égale à deux fois l'épaisseur du piston (3).

4. Amortisseur à huile selon l'une quelconque des revendications 1 à 3 caractérisé en ce que l'extrémité de la tige (34) centrale fait saillie par rapport à la tige (4) tubulaire dans le premier (21) volume de travail, un clapet (30) anti-retour de détente étant monté à l'extrémité de la tige (34) centrale, l'extrémité de la tige (34) centrale, qui fait saillie dans le premier (21) volume de travail, étant pourvue d'une tête (32, 33) formant un appui pour des moyens (31) élastique exerçant une pression sur le clapet (30) anti-retour de façon à appuyer ce dernier sur le siège d'un perçage (140) situé à l'extrémité de la tige (4) tubulaire solidaire du piston (3), pour obstruer l'orifice de sortie du passage (25) central vers le premier (21) volume de travail, des moyens (40, 41, 42) de commande à distance situé à proximité de l'extrémité de la tige (4) tubulaire rendue solidaire de la queue (35) de l'amortisseur permettant la translation de la tige (34) centrale par rapport à la tige (4) tubulaire pour régler la pression exercée par les moyens (31) élastique sur le clapet (30) détente sans démontage de l'amortisseur.

5. Amortisseur à huile selon la revendication 4 caractérisé en ce que le clapet (30) détente a sensiblement la forme d'un tube cylindrique pourvu d'un épaulement (130) radial à l'une de ses extrémités, le clapet (30) détente étant enfilé sur la tige (34) centrale et pouvant coulisser dans un logement (140) cylindrique complémentaire formé à l'extrémité de la tige (4) tubulaire solidaire du piston (3), la translation du clapet (30) détente vers l'intérieur de la tige (4) tubulaire étant limitée par la butée de l'épaulement (130) radial du clapet (30) sur le bord de l'extrémité de la tige (4) tubulaire et assurant l'obturation de l'orifice de sortie du passage (25) central vers le premier (21) volume de travail, le clapet (30) détente étant pourvu d'au moins une entaille (131) située dans un plan contenant l'axe de symétrie longitudinal du clapet (30) et ayant une profondeur décroissante de l'extrémité opposée à l'épaulement (130) vers l'épaulement (130), assurant une ouverture graduelle de l'orifice de sortie du passage (25) central vers le premier (21) volume de travail lors de la translation du clapet (30) détente dans le sens de sa sortie hors du logement (140) cylindrique de l'extrémité de la tige (4) tubulaire.

6. Amortisseur à huile selon l'une quelconque des revendications 1, 4 ou 5 caractérisé en ce que l'extrémité de la tige (34) centrale fait saillie par rapport à la tige (4) tubulaire dans le corps de la queue (35) de l'amortisseur et comporte un alésage (36) transversal complémentaire d'un axe (41) de réglage, l'axe (41) de réglage étant logé simultanément dans un logement (37) transversal formé dans la corps de la queue (35) de l'amortisseur et dans l'alésage (36) de la tige (34) centrale, le logement (37) transversal du corps de la queue (35) de l'amortisseur étant conformé pour permettre une translation limitée de l'axe (41) de réglage selon la direction de l'axe de symétrie longitudinal de la tige (34) centrale, les deux extrémités de l'axe (41) de réglage faisant saillie de part et d'autre du corps de la queue (35) de l'amortisseur, la queue (35) de l'amortisseur comportant un filetage (38) sur sa périphérie prévu pour le vissage d'un bouchon (42) de molette ayant sensiblement la forme d'une bague, l'axe (41) de réglage étant rendu solidaire du bouchon (42) de molette par des moyens (40) de blocage, de façon que le vissage et dévissage du bouchon (42) de molette sur le corps de la queue (35) de l'amortisseur assure le réglage de la position de l'axe (41) dans son logement (37) par rapport à la tige (4) tubulaire montée fixe en translation sur le corps de la queue (35) de l'amortisseur, pour régler la pression exercée par les moyens (31) élastique sur le clapet (30) détente.

7. Amortisseur à huile selon la revendication 6 caractérisé en ce que le bouchon (42) de molette est pourvu sur sa périphérie d'un filetage destiné au vissage d'une molette (40) de réglage ayant sensiblement la forme d'une bague et constituant les moyens de blocage de l'axe (41) de réglage, la molette (40) de réglage et le bouchon (42) de molette étant conformés de façon que le vissage la molette (40) de réglage sur le bouchon (42) de molette permette le blocage des extrémités de l'axe (41) de réglage entre la molette (40) de réglage et le bouchon (42) de molette.

8. Amortisseur à huile selon l'une quelconque des revendications 4 à 7 caractérisé en ce que le piston (3) comporte sur sa face située en vis-à-vis du premier (21) volume de travail, une saillie (103) sensiblement tubulaire et concentrique à l'orifice du piston (3) prévu pour l'ensemble tige (4) tubulaire, tige (34) centrale, la saillie (103) tubulaire étant destinée à réguler le flux d'huile transitant par le passage (25) central situé entre la tige (4) tubulaire et la tige (34) centrale lors de la détente, pour assurer un meilleur contrôle de cette dernière.

9. Amortisseur à huile selon l'une quelconque des revendications 1 à 8 caractérisé en ce que lors de la compression le piston (3) chasse l'huile du premier (21) volume de travail vers d'une part, le second (22) volume de travail au travers de passages (39) ménagés dans le corps du piston et obturés par une rondelle (50) anti-retour déformable, et d'autre part, vers une chambre (10) de réserve déformable sur l'extérieur de laquelle est appliquée un gaz (11), l'huile étant évacuée vers la chambre (10) de réserve par au moins deux orifices (13, 14) réglables intervenant chacun selon une vitesse de déplacement du piston différente, les orifices (13, 14) étant dispos's entre une chambre (12) intermédiaire de volume déterminé et la chambre (10) de réserve.

10. Amortisseur à huile selon la revendication 9 caractérisé en ce que l'huile est évacuée vers la chambre (10) de réserve par trois orifices réglables, un premier orifice étant obturé par un premier clapet anti-retour réglable de façon à ne permettre l'évacuation de l'huile que dans le cas où la pression exercée par le piston (3) sur l'huile dépasse les conditions prévues d'utilisation du véhicule les plus extrêmes, un second orifice étant obturé par un second clapet anti-retour réglé pour une plage de vitesses de déplacement du piston situé entre les basses vitesses et les vitesses de frein hydraulique, un troisième orifice étant pourvu d'un étranglement réglable permettant d'évacuer l'huile aux basses vitesses.

11. Amortisseur à huile selon la revendication 9 ou 10 caractérisé en ce que le piston (3) est vissé sur une portion (104) filetée située sensiblement à l'extrémité de la tige (4) tubulaire mobile, la rondelle (50) anti-retour déformable étant serrée sur une extrémité d'une rondelle (51) de précharge rigide en appui sur un épaulement (114) radial formé sur le corps de la tige (4) tubulaire mobile, la face de la rondelle (51) de précharge située en vis-à-vis de la rondelle (50) anti-retour étant sensiblement convexe pour permettre la déformation de la rondelle (50) anti-retour lors de la compression de l'amortisseur de façon que cette dernière viennent en appui sur la rondelle (51) de précharge.

12. Amortisseur à huile selon l'une quelconque des revendications 9 à 11 caractérisé en ce que la chambre (10) de réserve déformable est située dans un réservoir (7) rapporté au corps (2) cylindrique creux de l'amortisseur au moyen d'un raccord (6) rigide.
